# EUROPEAN PATENT SPECIFICATION

(11) **EP 1 452 468 B1**
(45) Date of publication and mention of the grant of the patent: **20.12.2006**
(21) Application number: 03425128.0
(22) Date of filing: 28.02.2003
(51) Int. Cl.: B65G 47/30

(54) **Synchronizing apparatus for conveying articles to processing stations**
Synchronisiereinrichtung zum Fördern von Artikeln zu Bearbeitungsstationen
Dispositif de synchronisation pour transporter des articles à des stations de traitement

(43) Date of publication of application: 01.09.2004
(73) Proprietor: HITECH SYSTEMS S.r.l., I-10040 Leini' (Province of Torino) (IT)
(72) Inventor: Delsanto, Mario, Monaco (Principato de Monaco) (MC)
(74) Representative: Spandonari, Carlo

(56) References cited:
- US-A- 3 190 434
- US-A- 3 266 614
- US-A- 5 547 004

## Description

### DISCLOSURE

This invention is concerned with a synchronizing apparatus for articles which are to be fed to processing stations downstream, such as packaging or wrapping machines or the like.

The above apparatus accepts articles, such as snacks, bars of soap and the like, from an input conveyor belt on which the articles are more or less randomly lined up, and space such articles uniformly so that they will enter a processing station located downstream at accurate positions. Known devices include a number of position-adjustment belts (usually at least four or five), which are arranged sequentially, downstream of the input conveyor belt. The above adjustment belts are individually moved by respective, regulated motors that are controlled by a control unit to adjust thier speeds in order to obtain, by successive step, a uniform flow of the articles in transit from one adjustment belt to the next, down to a feeding device for a packaging machine, typically comprising a further conveyor belt.

It appears from the above that a serious drawback of the known devices is the considerable room taken by the sequence of adjustment belts which are located upstream of the conveyor belt feeding the packaging machine.

US 5,547,004 describes a device for arranging a series of articles which are moving in sucession along a conveyor belt, in such a way that they move into phase with a processing unit connected downstream. A pawl, which is movable parallel to the articles, cooperates with carriers that are hinged at equal intervals to a motorized chain arranged parallel to the conveyor belt and moving at a different speed. When the carriers meet the pawl, they swing from a non-working position below the conveyor belt, to a working position projecting upwards the conveyor belt and interfering with the path of the articles whereby, e.g., individual articles may be made up into groups of a few articles, due to the fact that the conveyor belt and the carriers run at different speeds. Thus, the position where the carrier is activated depends on the position of the pawl, which is adjusted on the basis of parameters such as the speed of the articles upstream and downstream of the pawl, the position of the product processing unit, and the like. Each carrier is provided with locking means consisting of a spring-loaded member cooperating with a curved surface formed on the carrier in order to fix the two positions above.

A main object of the invention is therefore to overcome drawbacks of the known devices, by providing a synchronizing apparatus for articles to be fed to processing stations downstream, which apparatus has a compact size, and which can be directly attached at the end of the conveyor belt of the articles coming form previous processing steps.

Another object of the invention is to provide an apparatus as above, which has a high degree of flexibility with respect to known apparatus, and which, more particularly, is capable of operating with a wide variety of article sizes.

A further object of the invention is to provide an apparatus as above, which can be constructed by using tools and equipment widespread in the field, so that it can be manufactured at an advantageous cost and with a high productivity.

The above and other objects and advantages, such as will best appear below, are achieved by an article-synchronizing apparatus having the features recited in claim 1, the dependent claims defining other advantageous features.

The invention will now be described in more detail with reference to a preferred though not unique embodiment, shown by way of non limiting example in the attached drawings, wherein:

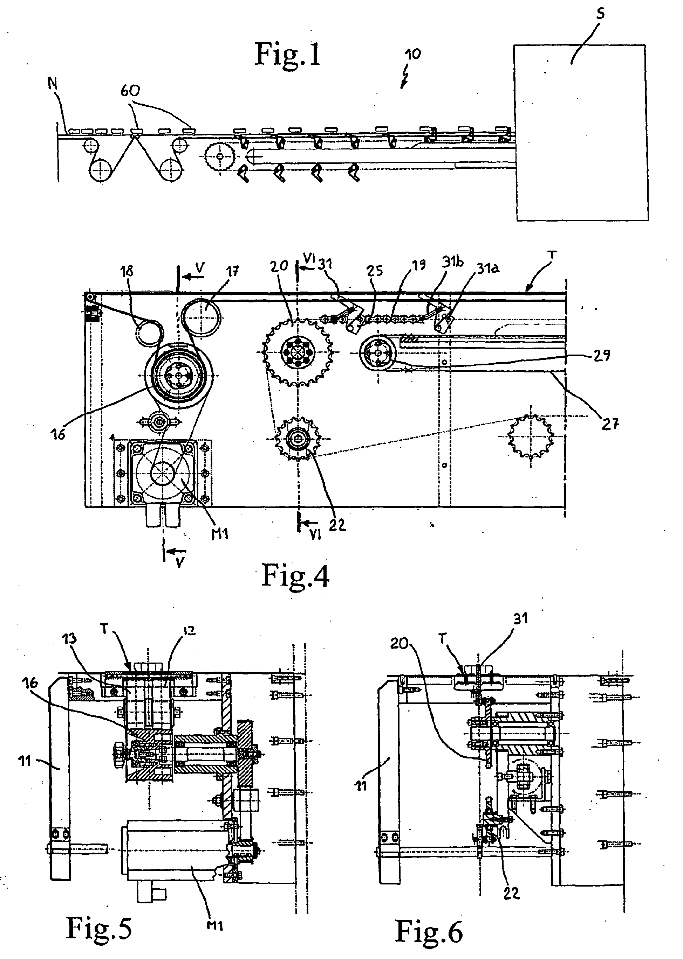

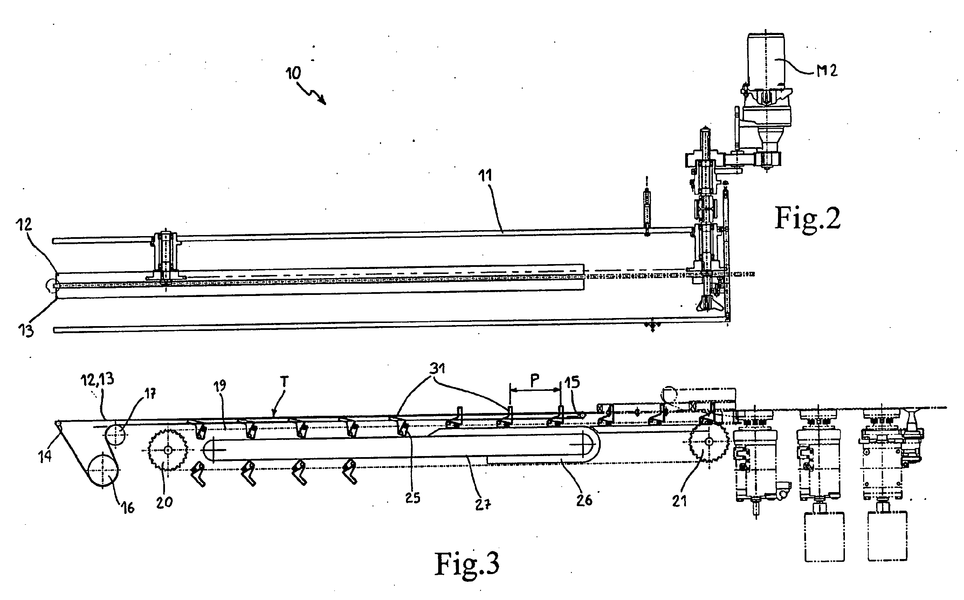

Fig. 1 is a lateral view of a conveyor line for articles coming from an input belt and going to a processing station, the line including a synchronizing apparatus according to the invention;
Figs. 2 and 3 are a plan view and a lateral view, respectively, on an enlarged scale, of the synchronizing apparatus of Fig. 1;
Fig. 4 shows an enlarged and partly broken away detail of the synchronizing apparatus of Fig. 3;
Figs. 5 and 6 are views in cross-section, made along lines V and VI of Fig. 4, respectively, of the synchronizing apparatus according to the invention;

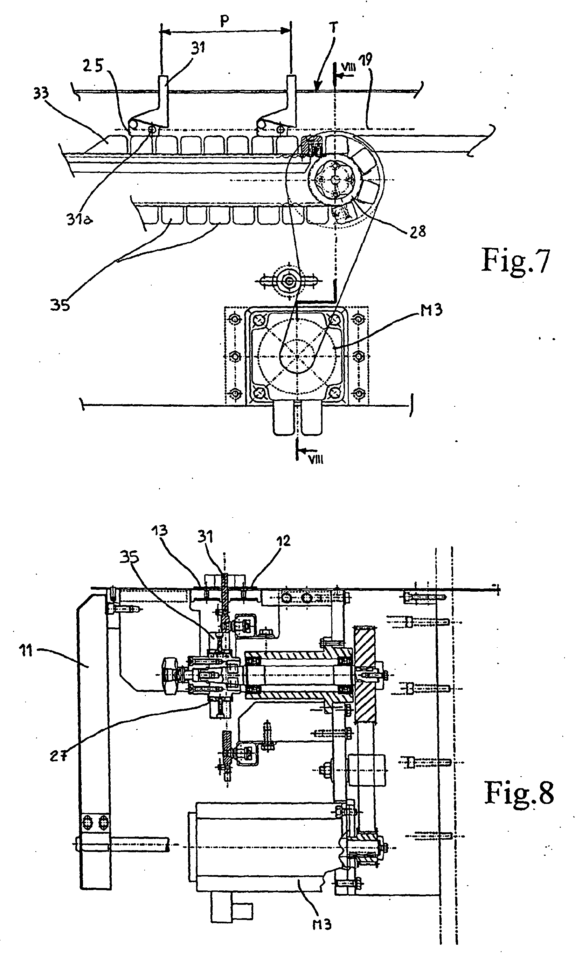

Fig. 7 shows an enlarged and partly broken away detail of the synchronizing apparatus of Fig. 3;
Fig. 8 is a view in cross-section made along line VIII of Fig. 7, of the synchronizing apparatus according to the invention;
Figs. 9a to 9d schematically show four successive operating steps of the synchronizing apparatus according to the invention.

With reference to the Figures, a conveying and synchronizing apparatus 10 receives a succession of identical articles 60, such as snacks, bars of soap or the like, from an input conveyor belt N, on which the articles are more or less randomly lined up, i.e. mutually spaced by non-uniform distances, and forwards the articles to a subsequent processing station S. Apparatus 10 comprises a frame 11 supporting twin spacer belts 12,13, extending between two rollers 14 and 15, which define a conveying plane T. The twin belts are driven by a driving pulley 16 keyed to a motor M1, with the support of two idle pulleys 17, 18.

A chain 19 extends parallelly between twin belts 12 and 13. Chain 10 is engaged by a pair of toothed wheels 20, 21, one of which is a driving wheel (wheel 21) and is keyed to a motor M2, the other being idle (idle wheel 20), and also by a tension pulley 22. Abutment prongs 31 are hinged to chain 10 at uniform intervals, at respective pivoting points such as 31 a. The prongs are provided with sliding blocks 25. The prongs are normally biased to a reclined position by springs 31b acting between the chain and the respective prongs.

A toothed belt 27 extends parallelly within said chain 19, from a driving pulley 28 keyed on a motor M3 to an idle pulley 29. Belt 27 is provided, over a portion of its length, with a series of square-edged blocks 35, attached to its outside surface, and also with a ramp-shaped block 33 at one end, so that a profiled riser 26 is formed. Thus, as prong 31 moves forward, when sliding block 25 of the prong meets the lead-in block 33 of riser profile 26, the prong will turn to extend outwardly and project from a plane T defined by spacer belt 12, 13. A sensor device, such as one or more photoelectric cells as will be obvious for a person skilled in the art, is connected to a control unit to sense, near the input to belt 12, 13, the position of the incoming article and compare it with the position of the previous article, and develop suitable control signals to adjust the position of profile riser 26, according to a procedure described below.

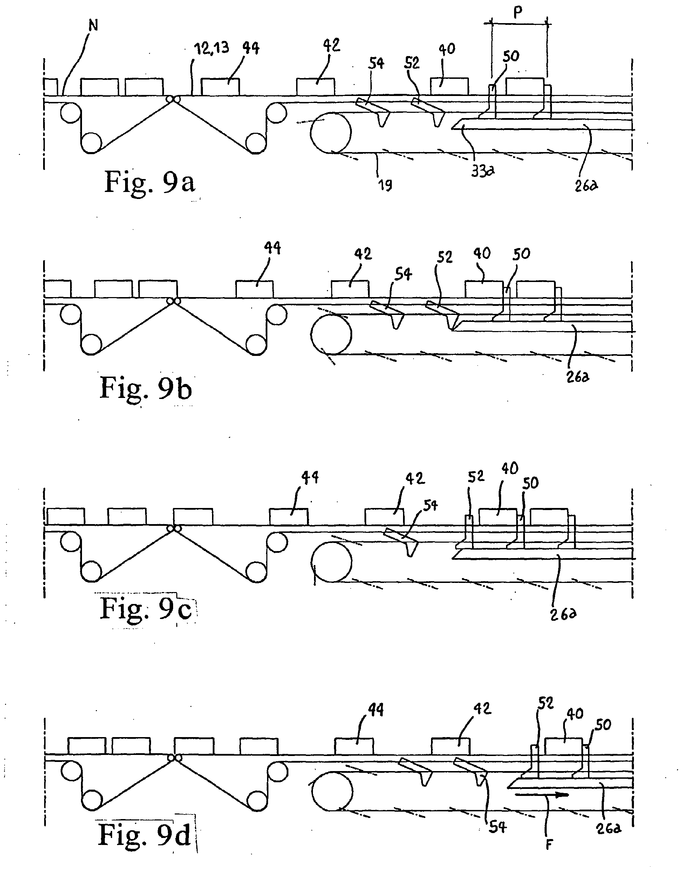

The operation, shown schematically in Figs. 9a to 9d, is as follows. The articles are conveyed from the input belt N to the twin belts 12, 13. Because of their higher advance speed, these not only pick up the articles but also space them out. Since the twin belts 12, 13 proceed at a speed that is also higher than the prongbearing chain 19, after a short run article 40 will abut against the respective prong 50, which, according to the invention, has risen up at the appropriate point, defined by the lead-in area 33a of the profiled riser 26a, as shown in Figs. 9a, 9b, such that article 40 will be located in the space between the respective prong 50 and the following prong 52. From this point onward, prong 50 will constrain article 40 to proceed at the former's speed, with which the article will attain the packaging machine, while twin belts 12, 13 run at a higher speed under it.

If, as shown in Figs. 9a to 9d, the next article 42 is farther from the previous one than the optimum average distance, the control unit, after the profiled riser has lifted catch 52, causes riser 26a to shift in a direction to move the lead-in area 33 away from the output of the input belt N (i.e. the direction of arrow F), thereby delaying the sliding block of prong 54 from engaging riser 26a. Article 42 thus is allowed to attain its optimum position between the respective prong 52 and the following prong 54, which has the task of engaging the subsequent article, and so on.

If, after a number of successive adjustments in the same direction, riser 26a reaches the end of the displacement to the right in Figs. 9a-9d, the control unit will issue a command to slow down chain 19 (together with the slave packaging machine), thereby causing the riser to move backwards.

A special advantage of the apparatus of the invention is that it easily adapts to different article sizes, merely by changing a few parameters, such as the pitch of the prongs, the speeds of motors M1, M2 and/or M3, etc.

A further advantage of the apparatus of the invention is that it can be manufactured at an advantageous cost and of having with a high yield, due to the automatic matching of the feed-belt/prong-chain system to the irregularities of the positions of the articles in the sequence.

Many changes may be made to the above invention within the scope defined by the appended claims. For instance, although conveyor belt 12, 13 is preferably a pair of twin belts, so that the prongs can proceed between twin belts 12, 13 and hold the articles against a central area to prevent a rotation which might deviate them from a proper path, the belt might, on the other hand, be simple and be enclosed on both sides by a succession of symmetrically arranged prongs. Also, prongs 31, rather than being pivotable around their pivoting points, might be elements sliding within respective seats attached at intervals to chain.

## Claims

1. A synchronizing apparatus for articles to be fed to a processing station, comprising an input conveyor belt (N) moving at a first speed, a spacer belt (12,13) arranged for receiving articles from the input belt and moving at a second speed, and a chain (19) extending parallelly to the spacer belt (12, 13) and bearing withdrawable catches (31) at uniform intervals, the catches being normally biased to an inoperative position in which they do not interfere with the articles, and being cooperable with a profiled riser (26) that is movable parallelly to the spacer belt and whose position is controllable, to be shifted by the profiled riser to an operative position where they interfere with the transiting articles, **characterized in that** said second speed is higher than said first speed and said profiled riser (26) comprises a series of square blocks (33, 35) lying close to one another on the outside surface of a riser-bearing belt (27) and attached to it, said riser-bearing belt (27) extending parallelly within said chain (19) from a driving pulley (28) and an idle pulley (29).

2. The apparatus of claim 1, **characterized in that** a lead-in block (33) at one end of said profiled riser is ramp-shaped.

3. The apparatus of claim 1 or 2, **characterized in that** said withdrawable catches are prongs (31) hinged to respective pivoting points along said chain and provided at one end with respective sliding blocks (25) which are adapted to cooperte with said square blocks (33, 35) to cause the prongs to rotate, so that a portion of the prongs projects into the path of the transiting articles.

4. The apparatus of claim 3, **characterized in that** it comprises biasing springs (31 b) operating between the chain (19) and the respective prongs (31) to bias the prongs to a withdrawn position.

5. The apparatus of any of claims 1 to 4, **characterized in that** said spacer belt comprises a pair of twin, side-by-side belts (12, 13), and said chain (19) is arranged below the conveying plane defined by said twin belts, said catches (31) being arranged to move below the conveying plane in an inoperative position, and to project and move between said twin belts in an operative position.

## Patentansprüche

1. Synchronisiervorrichtung für Gegenstände, die zu einer Verarbeitungsstation gefördert werden sollen, mit einem sich mit einer ersten Geschwindigkeit bewegenden Eingangsförderband (N), einem Distanzierungsband (12, 13), das zum Aufnehmen von Gegenständen von dem Eingangsband angeordnet ist und sich mit einer zweiten Geschwindigkeit bewegt, und einer sich parallel zu dem Distanzierungsband (12, 13) erstreckenden Kette (19), die in gleichmäßigen Abständen zurückziehbare Klinken (31) trägt, wobei die Klinken normalerweise in eine Ruhestellung vorgespannt sind, in der sie die Gegenstände nicht behindern, und die mit einem profilierten Heber (26) zusammenzuwirken vermögen, der parallel zu dem Distanzierungsband bewegbar ist und dessen Position steuerbar ist, um durch den profilierten Heber in eine Arbeitsstellung verstellt zu werden, in der sie mit den transportierten Gegen-ständen in Kontakt kommen, **dadurch gekennzeichnet, dass** die zweite Geschwindigkeit höher als die erste Geschwindigkeit ist und dass der profilierte Heber (26) eine Reihe eckiger Blöcke (33, 35) aufweist, die nahe beieinander auf der Außenfläche eines den Heber tragenden Bandes (27) liegen und an ihm befestigt sind, wobei sich das den Heber tragende Band (27) parallel innerhalb der Kette (19) von einer Antriebsrolle (28) und einer Losrolle (29) erstreckt.

2. Vorrichtung nach Anspruch 1, **dadurch gekennzeichnet, dass** ein Einlaufblock (33) an einem Ende des profilierten Hebers rampenförmig ist.

3. Vorrichtung nach Anspruch 1 oder 2, **dadurch gekennzeichnet, dass** die ausfahrbaren Klinken Zinken (31) sind, die an entsprechenden Gelenkpunkten entlang der Kette angelenkt sind und an einem Ende mit jeweiligen Gleitblöcken (25) versehen sind, die mit den eckigen Blöcken (33, 35) zusammenzuwirken vermögen, um die Zinken zu veranlassen, sich zu drehen, so dass ein Teil der Zinken in die Bahn der transportierten Gegenstände ragt.

4. Vorrichtung nach Anspruch 3, **dadurch gekennzeichnet, dass** sie Vorspannfedern (31b) aufweist, die zwischen der Kette (19) und den entsprechenden Zinken (31) wirkt, um die Zinken in eine zurückgezogene Stellung vorzuspannen.

5. Vorrichtung nach einem der Ansprüche 1 bis 4, **dadurch gekennzeichnet, dass** das Distanzierungsband ein Paar doppelter, Seite an Seite liegender Bänder (12, 13) umfasst und dass die Kette (19) unterhalb der durch die Doppelbänder festgelegten Förderungsebene angeordnet ist, wobei die Klinken (31) dazu angeordnet sind, sich in eine Ruhestellung unterhalb der Förderungsebene zu bewegen und in einer Arbeitsstellung sich zwischen die Doppelbänder zu bewegen und dazwischen hervorzuragen.

## Revendications

1. Dispositif de synchronisation pour transporter des articles à une station de traitement, comprenant un tapis roulant d'entrée (N) se déplaçant à une première vitesse, une bande intermédiaire (12, 13) disposée pour recevoir des articles depuis le tapis d'entrée et se déplaçant à une seconde vitesse, et une chaîne (19) s'étendant parallèlement à la bande intermédiaire (12, 13) et des cliquets retractables (31) à des intervalles uniformes, les cliquets étant normalement chargés vers une position inactive dans laquelle ils n'interfèrent pas avec les articles, et coopérant avec un retour profilé (26) qui est déplaçable parallèlement à la bande intermédiaire et dont la position peut être contrôlée, pour être déplacée par le retour profilée vers une position active dans laquelle ils interfèrent avec les articles en transit, **caractérisé en ce que** ladite seconde vitesse est supérieure à ladite première vitesse et **en ce que** le retour profilé (26) comprend une série de blocs carrés (33, 35) disposés de façon rapprochée les uns des autres sur la surface extérieure d'une bande (27) portant le retour et attachés à cette dernière, ladite bande (27) portant le retour s'étendant parallèlement à l'intérieur de ladite chaîne (19) depuis une poulie motrice (28) et sur une poulie folle (29).

2. Dispositif selon la revendication 1, **caractérisé en ce qu'**un bloc d'introduction (33) à une extrémité dudit retour profilé est en forme de rampe.

3. Dispositif selon l'une des revendications 1 ou 2, **caractérisé en ce que** lesdits cliquets rétractables sont des griffes (31) pivotantes autour des points de pivotement respectifs le long de ladite chaîne et pourvus à une extrémité de blocs coulissants respectifs (25) qui sont adaptés pour coopérer avec lesdits blocs carrés (33, 35) pour faire tourner les griffes, de telle sorte qu'une partie des griffes fait saillie dans la trajectoire des articles en transit.

4. Dispositif selon la revendication 3, **caractérisé en ce qu'**il comprend des ressorts de charge (31b) fonctionnant entre la chaîne (19) et les griffes (31) respectives pour faire pousser les griffes vers une position rétractée.

5. Dispositif selon l'une quelconque des revendications 1 à 4, **caractérisé en ce que** ladite bande intermédiaire comprend deux bandes côte à côte (12, 13) et ladite chaîne (19) est disposée au-dessous du plan de transport défini par lesdites deux bandes, lesdits cliquets (31) étant disposés pour se déplacer au-dessous du plan de transmission, dans une position inactive, et pour faire saillie et se déplacer entre lesdites bandes jumelles, dans une position active.
